# EUROPEAN PATENT SPECIFICATION

(11) **EP 1 967 841 B1**
(45) Date of publication and mention of the grant of the patent: **26.04.2017**
(21) Application number: 08004079.3
(22) Date of filing: 05.03.2008
(51) Int. Cl.: G01N 21/64, G06T 7/00

(54) **Fluorescence observation apparatus**
Fluoreszenzbeobachtungsvorrichtung
Appareil d'observation par fluorescence

(30) Priority: 09.03.2007 JP 2007060482
(43) Date of publication of application: 10.09.2008
(73) Proprietor: Olympus Corporation, Tokyo 192-8507 (JP)
(72) Inventor: Nakajima, Chika, Hachioji-shi, Tokyo 192-8507 (JP)
(74) Representative: von Hellfeld, Axel

(56) References cited:
- US-A1- 2003 231 791
- US-A1- 2005 175 538
- US-A1- 2006 064 000
- US-B1- 6 263 095

## Description

### BACKGROUND OF THE INVENTION

### 1. FIELD OF THE INVENTION

The present invention relates to a fluorescence observation apparatus.

### 2. DESCRIPTION OF RELATED ART

A known fluorescence observation apparatus in the related art irradiates a small laboratory animal such as a mouse with excitation light and observes fluorescence emitted in a lesion such as cancer tissue (for example, see U.S. Patent No. 5,650,135). In fluorescence observation, because fluorescence having a relatively high brightness is observed compared to luminescence-light observation, the observed image is clear, which has the advantage of making observation easier.

In drug discovery screening, a drug having an effect on a lesion is administered to small laboratory animals, and then changes in the lesion over time are observed in the same small laboratory animal, and the efficacy in multiple small laboratory animals is verified. In order to improve the screening accuracy in drug discovery screening, it is necessary to perform observation of the same small laboratory animal multiple times over time, and to perform observation of multiple small laboratory animals.

US 2003/231791 A1 discloses a method and apparatus for automated analysis of transmitted and fluorescently labelled biological samples, wherein the apparatus automatically scans at a low magnification to acquire images which are analyzed to determine candidate cell objects of interest. Once candidate objects of interest are identified, further analysis is conducted automatically to process and collect data from samples having different staining agents. The apparatus scans prepared slides of biological samples, and, through image processing techniques, identifies target areas for rescanning at a higher resolution.

US 2006/064000 A1 discloses an imaging system for imaging an object. The imaging system includes a support member adapted to receive the object in an immobilized state. The system also includes first means for imaging the immobilized object in a first imaging mode to capture a first image, and second means for imaging the immobilized object in a second imaging mode, different from the first imaging mode, to capture a second image. The first imaging mode is selected from the group: x-ray mode and radio isotopic mode. The second imaging mode is selected from the group: bright-field mode and dark-field mode. A removable phosphor screen is employed when the first image is captured and not employed when the second image is captured. The phosphor screen is adapted to transduce ionizing radiation to visible light. The phosphor screen is adapted to be removable without moving the immobilized object. The system can further include means for generating a third image comprised of the first and second image.

### BRIEF SUMMARY OF THE INVENTION

However, when performing multiple observations over time, it is necessary to repeat a procedure for mounting the small laboratory animal in the observation apparatus. This is inconvenient because positioning of the small laboratory animal must be performed for each observation. In other words, there is a problem in that it is not possible to efficiently acquire data if some time is needed for the positioning operation. In addition, if the positioning operation is not performed correctly, the positions of lesions in multiple acquired fluorescence images shift. This is undesirable because it makes it difficult to confirm changes in the lesions in comparative observation where multiple fluorescence images are arrayed on a display screen, as well as in comparative observation where the fluorescence images are displayed in a switched fashion.

The present invention has been conceived in light of the circumstances described above, and an object thereof is to provide a fluorescence observation apparatus which can efficiently perform data acquisition by simplifying the procedure for positioning the small laboratory animal, and which allows easy comparative observation of multiple images.

In order to realize the objects described above, the present invention provides the following solutions.

A fluorescence observation apparatus according to claim 1 is provided. The fluorescence observation apparatus may include an image storage unit configured to store a plurality of pairs of bright-field images and fluorescence images of a small laboratory animal in such a manner that relative positions thereof are associated; a display unit configured to display the plurality of fluorescence images stored in the image storage unit so as to be arrayed in at least one direction; an outline extracting unit configured to extract an outline shape of the small laboratory animal in each bright-field image; and an image-position adjusting unit configured to adjust a display position of each associated fluorescence image so that the outline shapes of the small laboratory animal extracted by the outline extracting unit are aligned with each other in a direction orthogonal to the arrayed direction.

According to the first aspect, the outline shape of the small laboratory animal in each bright-field image is extracted by operating the
outline-extracting unit. According to the first aspect, the display position of the fluorescence image associated with each bright-field image is adjusted by operating the image-position adjusting unit so that the outline shapes of the small laboratory animal in the plurality of bright-field images are aligned in a direction orthogonal to the arrayed direction. With the first aspect, by operating the display unit, the plurality of fluorescence images are displayed so as to be arrayed in at least one direction, with the display position of the fluorescence image corresponding to each bright-field image adjusted in this manner.

Accordingly, when acquiring bright-field images and fluorescence images of a small laboratory animal over time, it is possible to display a plurality of fluorescence images in which the shapes of the animals are aligned in a direction orthogonal to the arrayed direction, even when the procedure for positioning the small laboratory animal is performed roughly.

In other words, it is possible to shorten the time required for positioning the small laboratory animal, and therefore, it is possible to efficiently perform procedures such as drug discovery screening where changes in the lesion of the same small laboratory animal are observed over time, and the efficacy of a drug in multiple small laboratory animals is ascertained.

In the first aspect described above, the image-position adjusting unit calculates centers of gravity of the outline shapes of the small laboratory animal and adjusts the display position of each fluorescence image so that the centers of gravity corresponding to the fluorescence images are aligned
with each other in the direction orthogonal to the arrayed direction.

By doing so, even if the outline shape of the small laboratory animal shifts slightly, it is possible to display them so that the display positions of the fluorescence images do not move by a large amount in the direction orthogonal to the arrayed direction. Therefore, it is possible to quickly ascertain the relationships and shape changes of the lesions between each fluorescence image.

In the first aspect described above, the image-position adjusting unit may calculate longitudinal axes directions of the outline shapes of the small laboratory animal and orientations of the longitudinal axes and adjust a display angle of each fluorescence image so that the longitudinal axes directions and the orientations of the longitudinal axes corresponding to the fluorescence images are aligned.

By doing so, the plurality of fluorescence images arrayed in at least one direction are displayed by the display unit with the longitudinal axis directions and the orientations of the longitudinal axes of the small laboratory animals aligned. By aligning the longitudinal axis directions of the outline shapes, the outlines of the small laboratory animal are arrayed so as to be substantially parallel. In addition, by aligning the orientations of the longitudinal axes, it is possible to align the head directions of the small laboratory animal.

A second aspect is a fluorescence observation apparatus including an image storage unit configured to store a plurality of pairs of bright-field images and fluorescence images of a small laboratory animal, in such a manner that relative positions thereof are associated; a display unit configured to
display by switching among the plurality of fluorescence images stored in the image storage unit; an outline extracting unit configured to extract an outline shape of the small laboratory animal in each bright-field image; and an image-position adjusting unit configured to adjust a display position of each associated fluorescence image so that the outline shapes of the small laboratory animal extracted by the outline extracting unit are aligned with each other.

According to the second aspect, the outline shape of the small laboratory animal in each bright-field image is extracted by operating the outline-extracting unit. According to the second aspect, the display positions of the associated fluorescence images are adjusted by operating the image-position adjusting unit so that the outline shapes of the small laboratory animal in the plurality of bright-field images are aligned with each other. With the second aspect, the plurality of fluorescence images are displayed by the display unit in a switched fashion, with the display positions of the fluorescence images adjusted by the image-position adjusting unit in this way.

By doing so, with the second aspect, because the outline shapes of the small laboratory animal are aligned in the plurality of fluorescence images which are sequentially switched, it is possible to perform close-up comparative observation of only changes in or differences between lesions.

In the second aspect described above, the image-position adjusting unit calculates centers of gravity of the outline shapes of the small laboratory animal and adjusts the display position of each fluorescence image so that the centers of gravity corresponding to the fluorescence images are aligned
with each other.

By doing so, even if the outline shapes of the small laboratory animal shift slightly, they are displayed in an aligned manner so that the display positions of the fluorescence images are not shifted by a large amount. Therefore, it is possible to quickly ascertain the relationships and shape changes of the lesions between each fluorescence image.

In the second aspect described above, the image-position adjusting unit may calculate longitudinal axis directions of the outline shapes of the small laboratory animal and orientations of the longitudinal axes and adjust a display angle of each fluorescence image so that the longitudinal axis directions and the orientations of the longitudinal axes corresponding to the fluorescence images are aligned.

By doing so, the plurality of fluorescence images which are sequentially switched are displayed by the display unit with the longitudinal axis directions of the outline shapes of the small laboratory animal and the orientations of the longitudinal axes aligned. Thus, because the associated fluorescence images are displayed with the outline shapes of the small laboratory animal in the plurality of bright-field images aligned, as well as the rotation directions of those outline shapes, it is possible to more easily perform comparative observation.

Each of the above-described aspects may further include an observation optical system configured to acquire the bright-field images and fluorescence images of the small laboratory animal, wherein the plurality of fluorescence images stored in the image storage unit are displayed on the display
unit.

Each of the above-described aspects may further include an image analyzing unit configured to analyze the fluorescence images stored in the image storage unit.

Each of the above-described aspects may further include a case configured to accommodate the observation optical system and block light, wherein an openable-and-closable door and a sensor configured to detect opening and closing of the door are provided in the case, and the bright-field images and the fluorescence images are acquired by the observation optical system upon detection by the sensor that the door is closed.

With this configuration, by opening the door in the case, placing the small laboratory animal in the observation optical system, and closing the door of the case, the interior of the case is shielded from light. When the closing of the door of the case is detected by the sensor, in response thereto, the bright-field images and fluorescence images are acquired by the observation optical system. When the door of the case is closed, the interior of the case is shielded from light. Therefore, it is possible to acquire bright-field images and fluorescence images without any influence from external light and without any of the excitation light leaking outside.

The present disclosure affords advantages in that it is possible to efficiently perform data acquisition by simplifying the operation of positioning a small laboratory animal, and it is possible to easily perform comparative observation of multiple fluorescence images.

### BRIEF DESCRIPTION OF THE SEVERAL VIEWS OF THE DRAWINGS

- Fig. 1: is a diagram showing the overall configuration of a fluorescence observation apparatus according to an embodiment.
- Fig. 2A: is a diagram showing an example of a bright-field image acquired by the fluorescence observation apparatus in Fig. 1.
- Fig. 2B: is a diagram showing an example of a fluorescence image acquired by the fluorescence observation apparatus in Fig. 1.
- Fig. 3: is a diagram showing a center of gravity and mouse orientation calculated from the bright-field image acquired by the fluorescence observation apparatus in Fig. 1.
- Fig. 4: is a diagram showing an example of adjusted display positions using a plurality of bright-field images acquired by the fluorescence observation apparatus in Fig. 1.
- Fig. 5: is a diagram showing a display example in which the display positions of fluorescence images are adjusted on the basis of an amount of adjustment in display position for the bright-field images in Fig. 4.
- Fig. 6: is a diagram showing a display example in which the bright-field images (broken lines) in Fig. 4 and the fluorescence images in Fig. 5 are superimposed.
- Fig. 7: is a diagram showing a comparative example in which a plurality of bright-field images acquired by the fluorescence observation apparatus in Fig. 1 are displayed without being subjected to image processing.
- Fig. 8: is a diagram showing a comparative example in which a plurality of fluorescence images acquired by the fluorescence observation apparatus in Fig. 1 are displayed without being subjected to image processing.

### DETAILED DESCRIPTION OF THE INVENTION

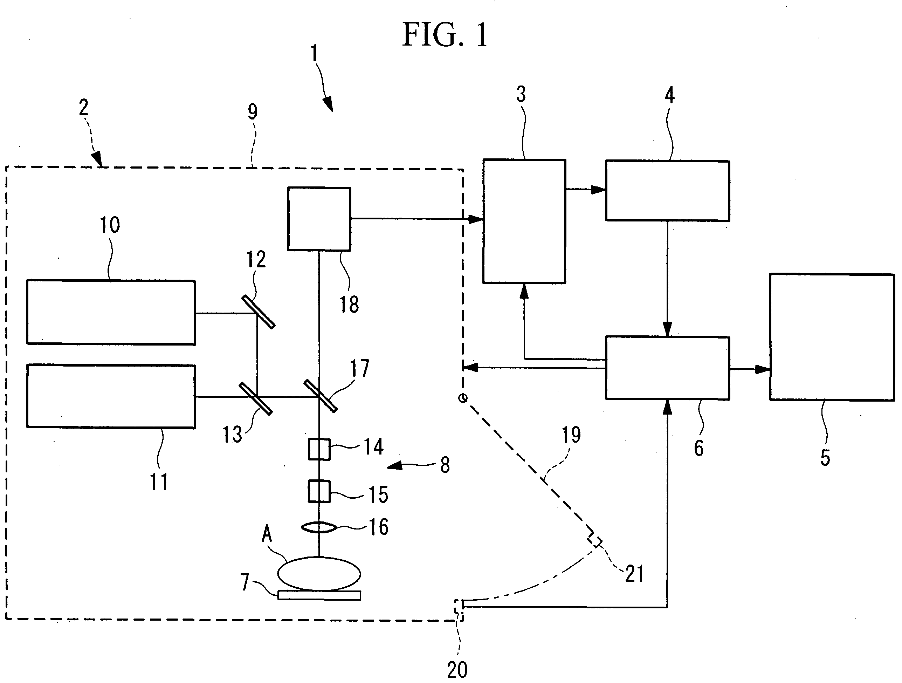

A fluorescence observation apparatus 1 according to an embodiment will be described below with reference to Figs. 1 to 8.

As shown in Fig. 1, the fluorescence observation apparatus 1 according to this embodiment includes an observation apparatus main body 2, an image generating unit 3, an image storage unit 4, a display unit 5, and a control unit 6 for controlling these components.

The observation apparatus main unit 2 includes a stage 7 for mounting a small laboratory animal, for example, a mouse A; an observation optical system 8; and a case 9 for accommodating the observation optical system 8 to shield it from light.

The observation optical system 8 includes a visible light
source 10 for emitting visible light for bright-field observation; an excitation light source 11 for emitting excitation light for fluorescence observation; a mirror 12 and a dichroic mirror 13 for combining these into the same light path; a focal-position-adjusting optical system 14 for adjusting the focal position of the visible light and the excitation light; a zoom optical system 15 for adjusting the observation magnification; an objective lens 16 for irradiating the mouse A on the stage 7 with the visible light and the excitation light and for collecting reflected visible light and fluorescence returning from the mouse A; a dichroic mirror 17 for splitting off the bright-field and the fluorescence collected by the objective lens 16 from the excitation light; and an image-acquisition device 18 for acquiring the split-off bright-field and fluorescence.

An openable/closable door 19 is provided in the case 9 in the vicinity of the stage 7. The door 19 is provided with a sensor 20 for detecting that the door 19 is closed. Reference numeral 21 is a detection member to be detected by the sensor 20. The detection member 21 is provided at a position facing the sensor 20 provided for the door 19 when the door 19 is closed. The sensor 20 detects that the door 19 is closed by detecting that the detection member 21 is located opposite the sensor 20.

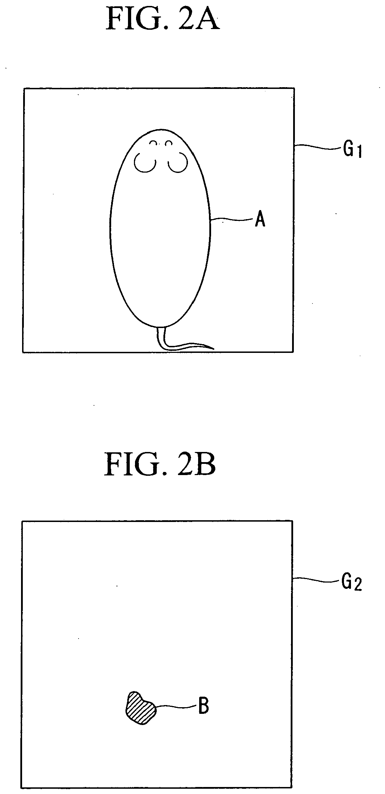

When the mouse A is irradiated with the visible light emitted from the visible light source 10, the image generating unit 3 generates a bright-field image G₁ shown in Fig. 2A, including the outline shape of the mouse A, which is obtained by acquiring the bright-field coming from the surface of the mouse A with the image-acquisition device 18. When the mouse A is irradiated with the excitation light emitted from the excitation light source 11, the image generating unit 3 generates a fluorescence image G₂ of a lesion B, shown in Fig. 2B, which is obtained by acquiring the fluorescence coming from the mouse A with the image acquisition device 18. The image generating unit 3 associates the generated bright-field image G₁ and the fluorescence image G₂.

The image-storage unit 4 sequentially stores the bright-field image G₁ and the fluorescence image G₂ associated in the image generating unit 3.

The control unit 6 drives the observation apparatus main body 2 upon receiving a close signal for the door 19 from the sensor 20 of the case 9 and operates the image generating unit 3 to associate the bright-field image G₁ and the fluorescence image G₂. In addition, after a plurality of pairs of bright-field images G₁ and fluorescence images G₂ are accumulated in the image storage unit 4, the control unit 6 reads out this plurality of pairs bright-field images G₁ and fluorescence images G₂ and performs the following image processing.

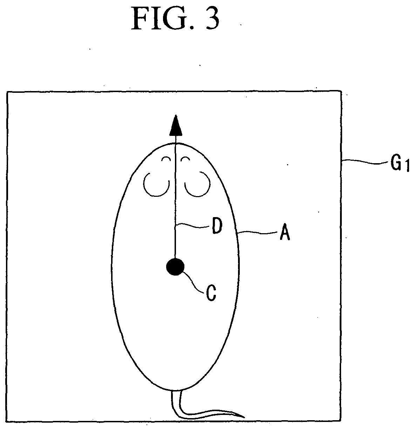

First, the control unit 6 processes each bright-field image G₁, as shown in Fig. 3, and extracts the outline shape of the mouse A contained in the bright-field image G₁. Extraction of the outline shape can easily be performed using a known method, such as binarization or pixel shift.

Next, the control unit 6 performs image processing to determine the center of gravity C of the extracted outline shape. The center of gravity C can be easily determined by calculating the area of the extracted outline shape and calculating the intersection of two dividing lines that divide the area in half.

Next, the control unit performs image processing to determine the longitudinal axis direction of the outline shape of the mouse A and the orientation of the mouse A (the orientation of the longitudinal axis of the outline shape of the mouse A, indicated by arrow D) in each bright-field image G₁. The longitudinal axis direction can easily be determined by joining pixels on the outline that are separated by the greatest distance. The orientation D of the mouse A can easily be determined by extracting features identifying the head and the tail regions, such as eyes, whiskers, a nose, or a tail.

Then the control unit 6 attaches display-position information and rotation-angle information to each bright-field image G₁ on the basis of the center of gravity C of the outline shape of the mouse A and the orientation D of the longitudinal axis thereof in the obtained bright-field images G₁. In other words, the control unit 6 attaches the display-position information and the rotation-angle information to each bright-field image G₁ so that the centers of gravity C calculated for the bright-field images G₁ are arrayed at equal intervals vertically and horizontally, and so that the orientations D of the longitudinal axes of the outline shapes of the mouse A in all bright-field images G₁ are aligned.

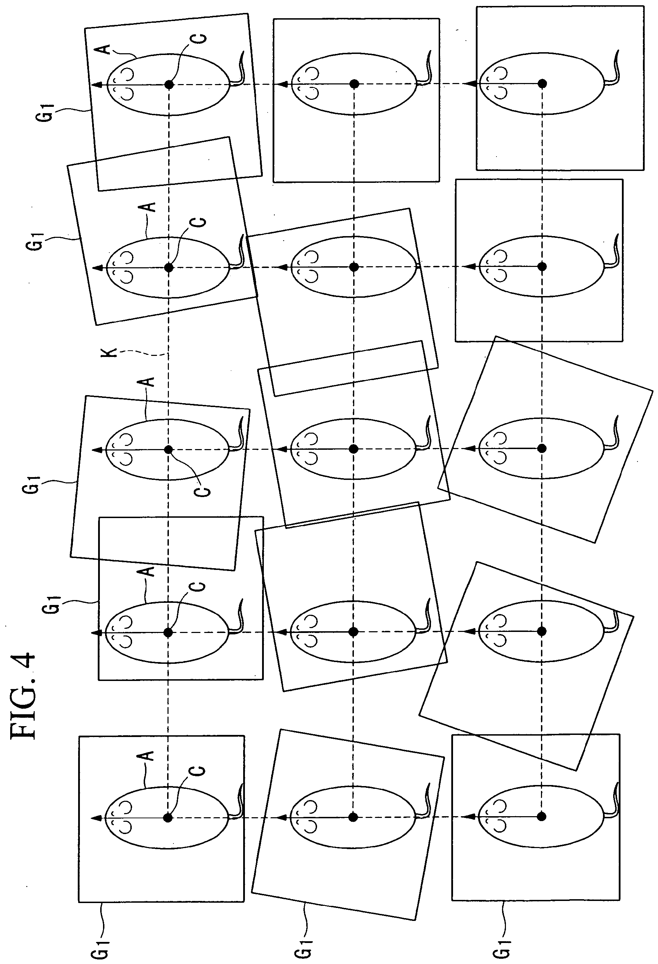

By using the display-position information and the rotation-angle information attached in this way, as shown in Fig. 4, the bright-field images G₁ can be arrayed so that the centers of gravity C are aligned at points disposed at equal intervals along vertical and horizontal lines K, and so that the arrows D in all bright-field images G₁ are oriented in the same direction.

Then, the display-position information and the rotation-angle information attached to the bright-field images G₁ are attached to the fluorescence images G₂ which are stored in association with the bright-field images G₁. In this embodiment, the control unit 6 displays fifteen of the fluorescence images G₂ in an array of three rows by five columns on the screen of the display unit 5.

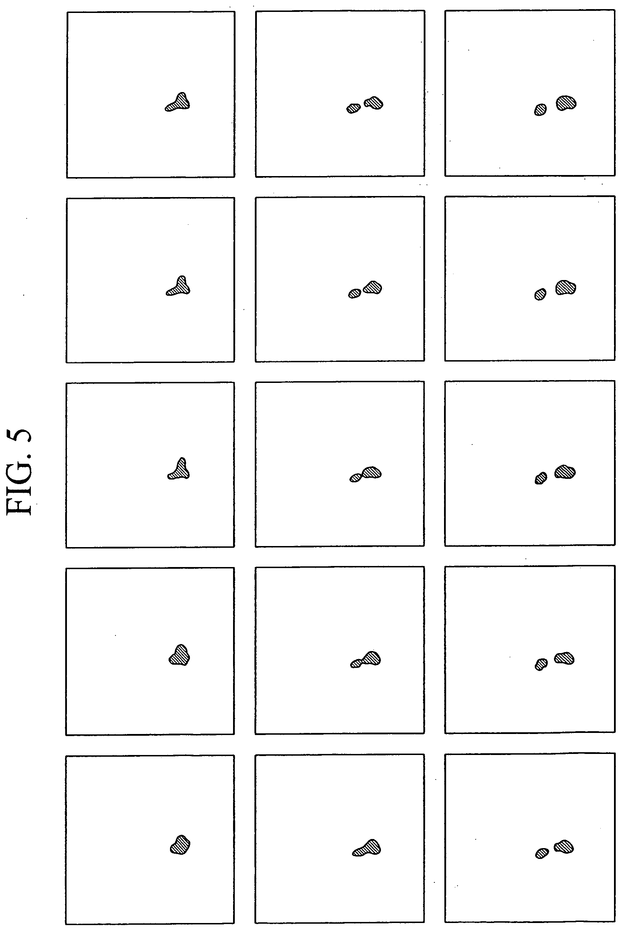

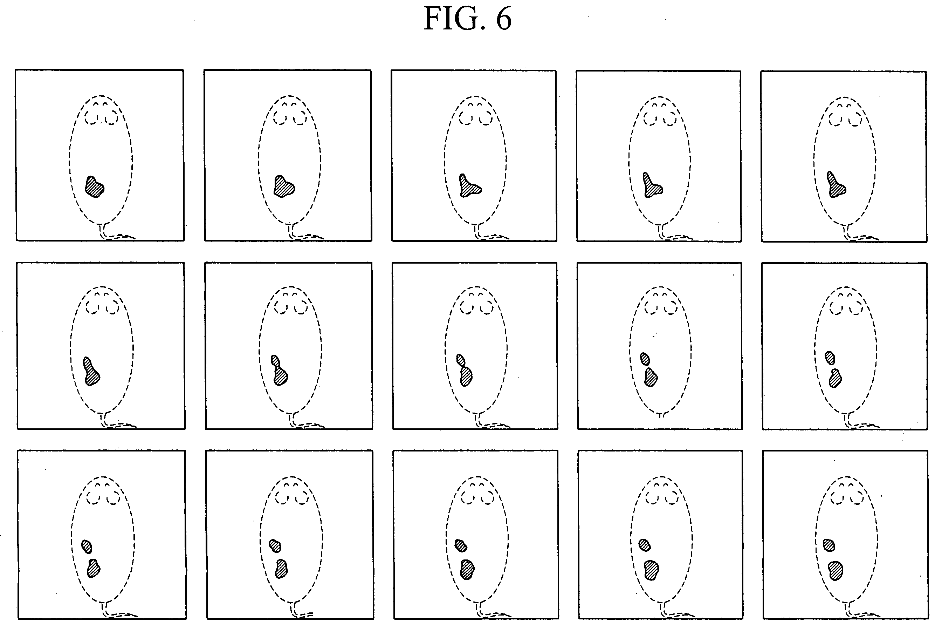

Accordingly, it is possible to display the fluorescence images G₂ in an array as shown in Fig. 5. At this time, the bright-field images G₁ associated with the fluorescence images G₂ are arrayed so that the outline shapes are correctly aligned, as shown by the broken lines in Fig. 6.

The operation of the fluorescence observation apparatus 1 according to this embodiment, having such a configuration, will be described below.

To perform fluorescence observation of the mouse A using the fluorescence observation apparatus 1 according to this embodiment, the operator secures the mouse A, which has been administered a fluorescent drug and put to sleep, on the stage 7 inside the case 9 of the observation apparatus main body 2 and closes the door 19 of the case 9.

Because the sensor 20 is provided for the door 19 of the case 9, a signal indicating that the door 19 is closed is sent from the sensor 20 to the control unit 6.

The control unit 6 sends activation signals to the observation apparatus main body 2 and the image generating unit 3, and image acquisition of the bright-field images G₁ and the fluorescence images G₂ is performed by the observation apparatus main body 2.

In other words, in response to the activation signal from the control unit 6, visible light is emitted from the visible light source 10 in the observation apparatus main body 2 and irradiates the mouse A on the stage 7. The light reflected at the surface of the mouse A is collected by the objective lens 16 and is acquired by the image acquisition device 18. The bright-field image G₁, which contains the outline shape of the mouse A acquired by the image acquisition device 18, is sent to the image generating unit 3, where it is temporarily held.

Next, the excitation light is emitted from the excitation light source 11 and irradiates the mouse A on the stage 7. In the mouse A, the fluorescent drug which is specifically accumulated in the lesion B, such as a carcinoma, is excited to produce fluorescence, which is then collected by the objective lens 16 and acquired by the image acquisition device 18. The fluorescence image G₂, which has high luminance at the shape of the lesion B acquired by the image acquisition device 18, is sent to the image generating unit 3, where it is associated with the bright-field image G₁ held there, and the images are stored in the image storage unit 4.

When performing time-lapse fluorescence observation of the same mouse A, the door 19 in the case 9 is opened, and the mouse A is removed and awakened. After it returns to normal activity, it is put to sleep again and the above process is repeated. By doing so, it is possible to store a plurality of pairs of images G₁ and G₂ such that they are accumulated in the image storage unit 4 in association with each other. When performing fluorescence observation of different mice A, the door 19 in the case 9 is opened, the mouse A is removed, a different sleeping mouse is inserted, and the above process is repeated.

When, for example, fifteen pairs of images G₁ and G₂ are accumulated in the image storage unit 4, the control unit 6 performs image processing on the bright-field images G₁ to calculate the centers of gravity C and the orientations D of the mouse. Then, the display-position information and rotation-angle information is attached to each bright-field image G₁ so that the centers of gravity C are arrayed at equal intervals and the orientations D of the mouse are aligned in the same direction, as shown in Fig. 4.

By attaching the display-position information and rotation-angle information attached to each bright-field image G₁ to the fluorescence images G₂ associated with the bright-field images G₁, the fluorescence images G₂ are displayed on the display unit 5 so that all images of the mouse A are arrayed at equal intervals and with the same orientation, as shown in Fig. 5.

With the fluorescence observation apparatus 1 according to this embodiment, configured in this way, the same mouse A or a plurality of different mice A can be displayed on the display unit 5 such that the fluorescence images G₂ acquired at time intervals are correctly aligned. Therefore, when observing time-lapse changes in the shape of the lesion B in the same mouse A, the changes can be easily observed, which affords an advantage in that it is possible to observe even minute changes without overlooking them. In addition, it is possible to perform comparative observation of the shapes of lesions B in a plurality of different mice A, thus making it possible to easily discover differences in the lesions B due to differences in the individual mice.

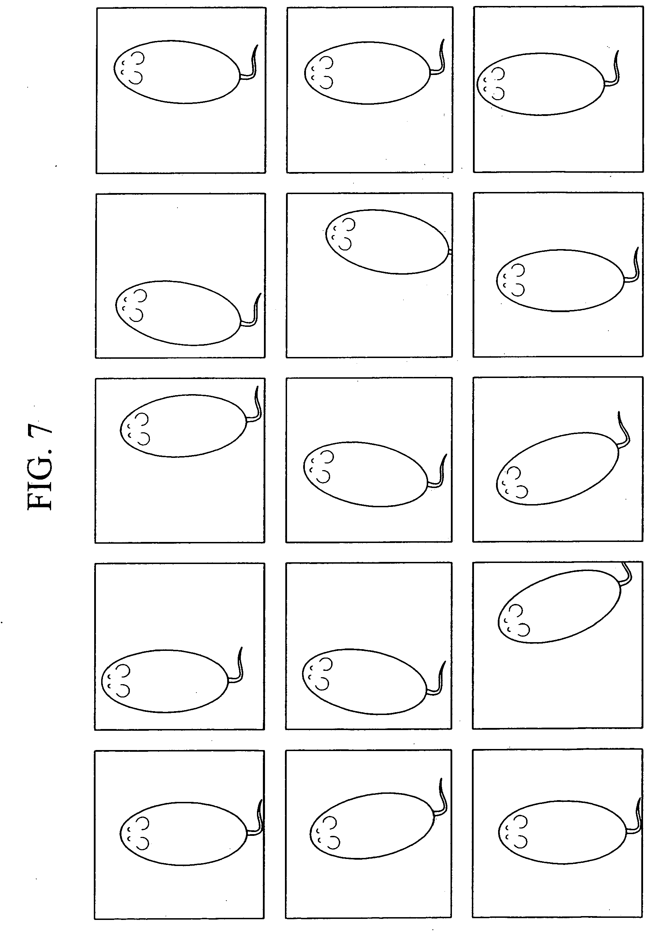

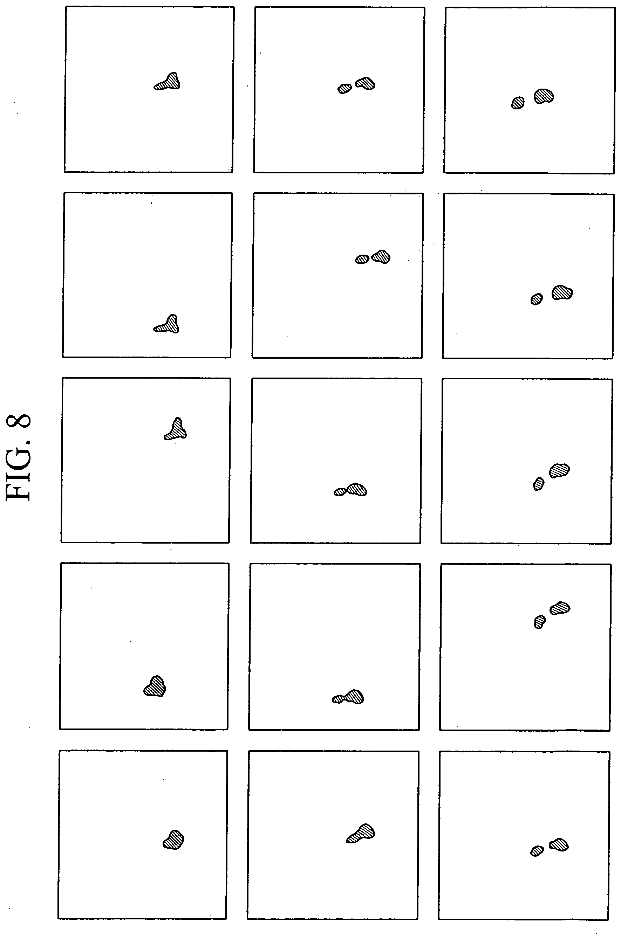

For comparison, cases where the plurality of acquired bright-field images G₁ and fluorescence images G₂ are directly displayed in an arrayed manner, without performing the image processing described above, are shown in Figs. 7 and 8, respectively. According to Fig. 8, because there are fluorescence images G₃ in which the lesion B is shifted in position up and down on the display screen and is also rotated, it is difficult to quickly and reliably determine whether the position of the lesion B in the mouse A has changed or whether the shape thereof has changed.

In contrast, with the fluorescence observation apparatus 1 according to this embodiment, as shown in Fig. 4, the associated fluorescence images G₂ are displayed in an array, with all outline shapes of the mouse A correctly aligned, as shown in Fig. 5. Therefore, the fluorescence observation apparatus 1 according to this embodiment affords an advantage in that it is possible to easily notice minute changes in position or minute changes in shape of the lesions B in the outline shapes of the mouse A.

In this embodiment, when acquiring the images G₁ and G₂, which are acquired over time, the procedure for securing the mouse A on the stage 7 is performed each time image acquisition is performed. With the fluorescence observation apparatus 1 according to this embodiment, this securing procedure is performed by roughly positioning the mouse A so that substantially the entire body thereof is placed in the field of view of the image acquisition device 18. In other words, with this fluorescence observation apparatus 1, because the fluorescence images G₂ produced are moved and displayed as an array so that the mouse A is correctly aligned, it is not necessary to correctly position and secure the mouse A on the stage 7.

As a result, it is possible to easily perform the procedure for securing the mouse A, thus shortening the observation time.

In particular, when performing drug discovery screening and so forth, if it is necessary to perform image acquisition for multiple mice A, an advantage is afforded in that it is possible to shorten the time required for replacing the mouse A, thus allowing multiple fluorescence images G₂ to be accumulated rapidly.

In this embodiment, the observation optical system 8 including the excitation light source 11 is accommodated inside the case 9, and excitation light is emitted from the excitation light source 11 upon detecting closing of the door 19. Therefore, an advantage is afforded in that it is possible to prevent the problem of the excitation light leaking outside.

In this embodiment, the case where only the fluorescence images G₂ are displayed as an array has been described. Instead of this, however, the fluorescence images G₂ and the bright-field images G₁, which are stored in association with each other, may be displayed in a superimposed manner.

In this embodiment, the mouse A is illustrated as an example of the small laboratory animal, but the invention is not limited thereto. It is possible to employ any other type of small laboratory animal in the fluorescence observation.

In this embodiment, the case where fifteen fluorescence images
G₂ are arrayed has been illustrated as an example. Instead of this, however, any number of fluorescence images G₂ may be displayed in any number of rows and columns. Moreover, a single row or a single column of fluorescence images G₂ may be displayed.

The area, the average luminance, the maximum luminance and so on of the lesion B may be calculated in the control unit 6 on the basis of the plurality of acquired fluorescence images G₂, to perform analysis of the lesion B using this information.

In this embodiment, the case where a plurality of fluorescence images G₂ are arrayed and displayed all together has been described. Instead of this, however, the plurality of fluorescence images G₂ may be sequentially displayed one-by-one.

In this case, they should be displayed so that the centers of gravity C and the orientations D of the mouse A calculated in the control unit 6 are aligned in all images.

By doing so, it is possible to easily observe changes in the same mouse A over time.

Also, when performing comparative observation of a plurality of different mice A, it is possible to more clearly observe differences in the size and position of the lesions B, which affords an advantage in that it is possible to perform observation without overlooking even minute differences.

In this embodiment, bright-field images G₁ and fluorescence images G₂ with the same magnification are stored in association with each other, and the arrayed positions and orientations of the fluorescence images G₂ are adjusted on the basis of the bright-field images G₁. Instead of this, however, bright-field images G₁ and fluorescence images G₂ with different magnifications may be stored in association with each other. In this case, because the lesion B is offset from the center of gravity C of the outline shape of the mouse A in the bright-field image G₁, the product of the magnification ratio of the fluorescence image G₂ and the bright-field image G₁ and the amount of translational movement in the bright-field image G₁ should be set as display-position information in the fluorescence image G₂.

## Claims

1. A fluorescence observation apparatus (1) comprising:
an image storage unit (4) configured to store a plurality of pairs of bright-field images and fluorescence images of a small laboratory animal in such a manner that relative positions thereof are associated;
a display unit (5) configured to display the pairs of bright-field images and fluorescence images such that
the images are arrayed in at least one direction or
displayed in a switching manner; and
an outline extracting unit (6) configured to extract an outline shape of the small laboratory animal in each bright-field image;
**characterized by** further comprising:
an image-position adjusting unit (6) configured to calculate longitudinal axes directions and orientations of the longitudinal axes of the outline shapes of the small laboratory animal, and to adjust a display angle of each bright-field image and
associated fluorescence image so that the outline shapes of the small laboratory animal extracted from the bright-field images by the outline extracting unit (6) are aligned, wherein the image-position adjusting unit (6) further is adapted to calculate centers of gravity of the outline shapes of the small laboratory animal and to adjust the display position of the bright-field images and the associated fluorescence images so that the centers of gravity of outline images extracted by the outline extracting unit (6) are aligned with each other.

2. The fluorescence observation apparatus according to Claim 1, **characterized in that**
the display unit (5) is configured to display the plurality of pairs of images so as to be arrayed in at least one direction; and
to displays the centers of gravity of the outline shapes at equal intervals in the at least one direction.

3. A fluorescence observation apparatus according to one of Claims 1 to 2, **characterized by** further comprising:
an observation optical system (8) configured to acquire the bright-field images and fluorescence images of the small laboratory animal,
wherein the display unit (5) is configured to display the plurality of fluorescence images stored in the image storage unit (4).

4. A fluorescence observation apparatus according to Claim 3, **characterized by** further comprising:
an image analyzing unit configured to analyze the fluorescence images stored in the image storage unit (4).

5. A fluorescence observation apparatus according to Claim 3 or 4, **characterized by** further comprising:
a case (9) configured to accommodate the observation optical system (8) and to block light,
wherein an openable-and-closable door (19) and a sensor (20) configured to detect opening and closing of the door (19) are provided in the case (9), and the observation optical system (8) is configured to acquire the bright-field images and the fluorescence images upon detection by the sensor (20) that the door (19) is closed.

## Patentansprüche

1. Fluoreszenzbeobachtungsgerät (1), das umfasst:
eine Bildspeichereinheit (4), die dazu eingerichtet ist, eine Mehrzahl von Paaren von Hellfeldbildern und Fluoreszenzbildern eines kleinen Labortiers derart zu speichern, dass deren relative Positionen zugeordnet werden;
eine Anzeigeeinheit (5), die dazu eingerichtet ist, die Paare von Hellfeldbildern und Fluoreszenzbildern derart anzuzeigen, dass
die Bilder in mindestens einer Richtung angeordnet werden oder
in einer wechselnden Art und Weise angezeigt werden; und
eine Konturextraktionseinheit (6), die dazu eingerichtet ist, eine Konturform des kleinen Labortiers in jedem Hellfeldbild zu extrahieren;
**dadurch gekennzeichnet, dass** es ferner umfasst:
eine Bildpositionseinstelleinheit (6), die dazu eingerichtet ist, Längsachsenrichtungen und Orientierungen der Längsachsen der Konturformen des kleinen Labortiers zu berechnen und einen Anzeigewinkel eines jeden Hellfeldbilds und eines zugehörigen Fluoreszenzbilds so einzustellen, dass die durch die Konturextraktionseinheit (6) aus den Hellfeldbildern extrahierten Konturformen des kleinen Labortieres, fluchtend ausgerichtet werden, wobei die Bildpositionseinstelleinheit (6) ferner dazu eingerichtet ist, Schwerpunkte der Konturformen des kleinen Labortiers zu berechnen und die Anzeigeposition der Hellfeldbilder und der zugehörigen Fluoreszenzbilder so einzustellen, dass die Schwerpunkte von durch die Konturextraktionseinheit (6) extrahierten Konturbilder fluchtend ausgerichtet werden.

2. Fluoreszenzbeobachtungsgerät nach Anspruch 1, **dadurch gekennzeichnet, dass**
die Anzeigeeinheit (5) dazu eingerichtet ist, die Mehrzahl von Paaren von Bildern so anzuzeigen, dass sie in mindestens eine Richtung angeordnet sind; und
die Schwerpunkte der Konturformen in gleichen Intervallen in der mindestens einen Richtung anzuzeigen.

3. Fluoreszenzbeobachtungsgerät nach einem der Ansprüche 1 bis 2, **dadurch gekennzeichnet, dass** es ferner umfasst:
ein optisches Beobachtungssystem (8), das dazu eingerichtet ist, die Hellfeldbilder und Fluoreszenzbilder des kleinen Labortiers aufzunehmen,
wobei die Anzeigeeinheit (5) dazu eingerichtet ist, die Mehrzahl von in der Bildspeichereinheit (4) gespeicherten Fluoreszenzbildern anzuzeigen.

4. Fluoreszenzbeobachtungsgerät nach Anspruch 3, **dadurch gekennzeichnet, dass** es ferner umfasst:
eine Bildanalyseeinheit, die dazu eingerichtet ist, die in der Bildspeichereinheit (4) gespeicherten Fluoreszenzbilder zu analysieren.

5. Fluoreszenzbeobachtungsgerät nach Anspruch 3 oder 4, **dadurch gekennzeichnet, dass** es ferner umfasst:
ein Gehäuse (9), das dazu eingerichtet ist, das optische Beobachtungssystem (8) aufzunehmen und Licht abzuschirmen,
wobei eine zu öffnende und zu schließende Tür (19) und ein Sensor (20), der dazu eingerichtet ist, das Öffnen und Schließen der Tür (9) zu erfassen, in dem Gehäuse (9) vorgesehen sind, und
das optische Beobachtungssystem (8) dazu eingerichtet ist, die Hellfeldbilder und die Fluoreszenzbilder aufzunehmen, wenn durch den Sensor (20) erfasst wird, dass die Tür (19) geschlossen ist.

## Revendications

1. Appareil (1) d'observation de fluorescence comprenant :
une unité (4) de stockage d'images configurée pour stocker une pluralité de paires d'images en champ clair et d'images de fluorescence d'un petit animal de laboratoire de telle manière que des positions relatives de celles-ci sont associées ;
une unité (5) d'affichage configurée pour afficher les paires d'images en champ clair et d'images de fluorescence de telle sorte que
les images sont groupées dans au moins un sens ou
affichées d'une manière en commutation ; et
une unité (6) d'extraction de contour configurée pour extraire une forme de contour du petit animal de laboratoire dans chaque image en champ clair ;
**caractérisé en ce que** comprenant en outre :
une unité (6) d'ajustement de position d'images configurée pour calculer des sens et des orientations d'axes longitudinaux des axes longitudinaux des formes de contour du petit animal de laboratoire, et pour ajuster un angle d'affichage de chaque image en champ clair et chaque image de fluorescence associée de telle sorte que les formes de contour du petit animal de laboratoire extraites des images en champ clair par l'unité (6) d'extraction de contour sont alignées, dans lequel l'unité (6) d'ajustement de position d'images est en outre adaptée à calculer des centres de gravité des formes de contour du petit animal de laboratoire et à ajuster la position d'affichage des images en champ clair et des images de fluorescence associées de telle manière que les centres de gravité des images de contour extraites par l'unité (6) d'extraction de contour sont alignés les uns avec les autres.

2. Appareil d'observation de fluorescence selon la revendication 1, **caractérisé en ce que**
l'unité (5) d'affichage est configurée pour afficher la pluralité de paires d'images de façon à ce qu'elles soient groupées dans au moins un sens ; et
pour afficher les centres de gravité des formes de contour à intervalles égaux dans l'au moins un sens.

3. Appareil d'observation de fluorescence selon l'une des revendications 1 à 2, **caractérisé en ce que** comprenant en outre :
un système optique (8) d'observation configuré pour acquérir les images en champ clair et les images de fluorescence du petit animal de laboratoire,
dans lequel l'unité (5) d'affichage est configurée pour afficher la pluralité d'images de fluorescence stockées dans l'unité (4) de stockage d'images.

4. Appareil d'observation de fluorescence selon la revendication 3, **caractérisé en ce que** comprenant en outre :
une unité d'analyse d'images configurée pour analyser les images de fluorescence stockées dans l'unité (4) de stockage d'images.

5. Appareil d'observation de fluorescence selon la revendication 3 ou 4, **caractérisé en ce que** comprenant en outre :
un boîtier (9) configuré pour recevoir le système optique (8) d'observation et bloquer la lumière,
dans lequel une porte (19) pouvant être ouverte et fermée et un capteur (20) configuré pour détecter l'ouverture et la fermeture de la porte (19) sont disposés dans le boîtier (9), et
le système optique (8) d'observation est configuré pour acquérir les images en champ clair et les images de fluorescence à la détection par le capteur (20) que la porte (19) est fermée.
